# EUROPEAN PATENT SPECIFICATION

(11) **EP 0 646 773 B1**
(45) Date of publication and mention of the grant of the patent: **09.07.1997**
(21) Application number: 94116572.2
(22) Date of filing: 29.01.1991
(51) Int. Cl.: G01C 21/00, G01C 21/20, G09B 29/10

(54) **Navigation aid including map transparency holder**
Navigationshilfe mit Halter für transparente Karten
Aide de navigation avec support de cartes transparentes

(30) Priority: 29.01.1990 US 471943; 24.08.1990 US 572753
(43) Date of publication of application: 05.04.1995
(62) Divisional of application: 91902369.7
(73) Proprietor: NAVITRAK CORP., Oakville, Ontario L6H 2W2 (CA)
(72) Inventor: Hill, David Carey, Oakville, Ontario L6H 2W2 (CA)
(74) Representative: Asquith, Anthony

(56) References cited:
- US-A- 3 094 781
- US-A- 3 269 261
- US-A- 3 983 630
- US-A- 4 422 738

## Description

### TECHNICAL FIELD

This invention relates generally to navigation aids and devices, and particularly to a device for converting map bearings to provide an indication of the true land or sea bearing, the device including a holder for a map transparency.

In reading a map and navigating with a compass, amateur or occasional navigators frequently fail to properly account for magnetic declination, either by neglecting it entirely, or by taking it in the wrong direction, thus producing an error of twice the magnetic declination. More seriously, amateur or occasional navigators may align the compass needle incorrectly or misinterpret the reading or make other similar errors to produce a 180 degree error.

There is a need for a navigation device which facilitates relatively foolproof conversion of map data into a land or sea bearing to be taken.

### BACKGROUND ART

Some prior art devices have used map transparencies mounted in a frame with a lens and rotatable grid, to facilitate obtaining a map bearing. For example, see United States patent no. 3,094,781 (Vangor, 1963).

However, such devices generally accomplish no more than can be accomplished using a protractor on a laid-out paper map, i.e. they merely provide a map bearing. There remains the problem of using a compass to convert the map bearing to the true land or sea bearing.

### DISCLOSURE OF INVENTION

It is thus an object of the invention to provide a navigation device which facilitates relatively foolproof conversion of map data into a land or sea bearing to be taken.

It is a further object of the invention to provide, for the navigation device, a transparency holder which is adapted to permit the insertion of a map transparency in one orientation only.

In the invention, a map transparency, a grid wheel, a counter-rotating direction wheel and a compass are combined in such a fashion such that map information can be directly converted to a land or sea bearing in virtually foolproof fashion.

More particularly, the invention involves, mounted in a case parallel to and aligned with each other, a lens across an opening at one end of the case and a compass, having a body, transparent faces and a magnetic compass needle, across an opening at the opposite end of the case. A transparency holder is positioned between the lens and the compass at a distance from the lens approximating the focal length of the lens, and is adapted to receive a map transparency with magnetic north thereon aligning with a North marking on the case or on the body of the compass. A grid wheel is provided between the transparency holder and the compass, having a transparent or translucent central area inscribed with parallel grid lines and at least one first directional arrow aligned parallel to the grid lines, the grid wheel being in close proximity to the transparency holder such that it is also at a distance from the lens approximating the focal length of the lens. Positioned between the grid wheel and the compass, and geared to the grid wheel for counter-rotation therewith, is a direction wheel having a transparent or translucent central area inscribed with at least one second directional arrow, the first and second directional arrows aligning with each other when pointing towards the North marking or 180 degrees therefrom. A bearing may thus be taken by examining an installed map transparency through the lens, rotating the grid wheel to align the grid lines and the at least one first directional arrow with the desired direction of travel on the map, then aligning the compass needle with the North marking on the body of the compass, the at least one second directional arrow then indicating the bearing to be taken.

Alternatively, as described below, the map transparency could be positioned between the grid wheel and the direction wheel, adjacent the grid wheel.

As described below, the transparency holder has certain asymmetric features which ensure that it can only be installed in the navigation device in the one correct orientation.

Further features of the invention will be described or will become apparent in the course of the following detailed description.

### BRIEF DESCRIPTION OF DRAWINGS

In order that the invention may be more clearly understood, preferred and alternative embodiments thereof will now be described in detail by way of example, with reference to the accompanying drawings, in which:
Fig. 1 is an exploded perspective, showing the various components of the device;

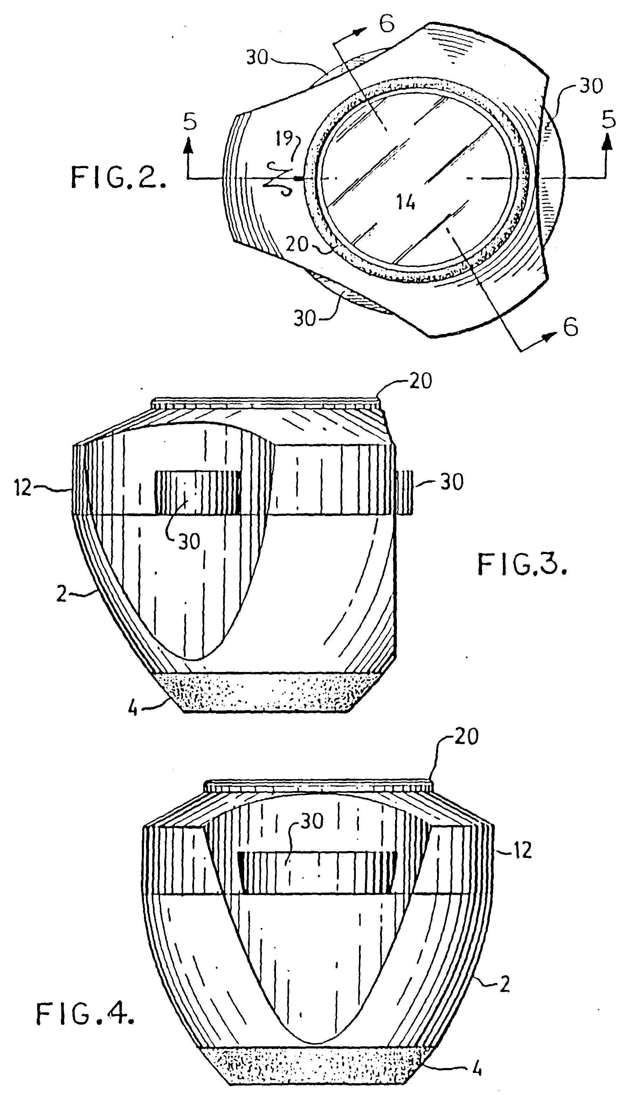

Fig. 2 is a top view of the preferred embodiment of the transparency holder, assembled;
Fig. 3 is a front elevation;
Fig. 4 is side elevation;
Fig. 5 is a cross-section at A-A on Fig. 2;
Fig. 6 is a cross-section at B-B on Fig. 2;

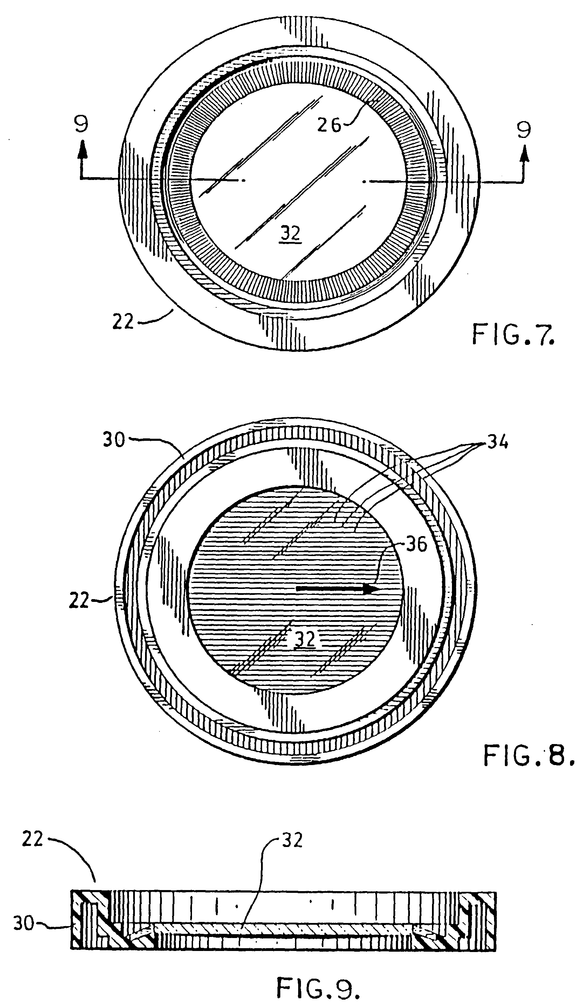

Fig. 7 is a top view of the grid ring;
Fig. 8 is a bottom view of the grid ring;
Fig. 9 is a cross-section at C-C on Fig. 7;

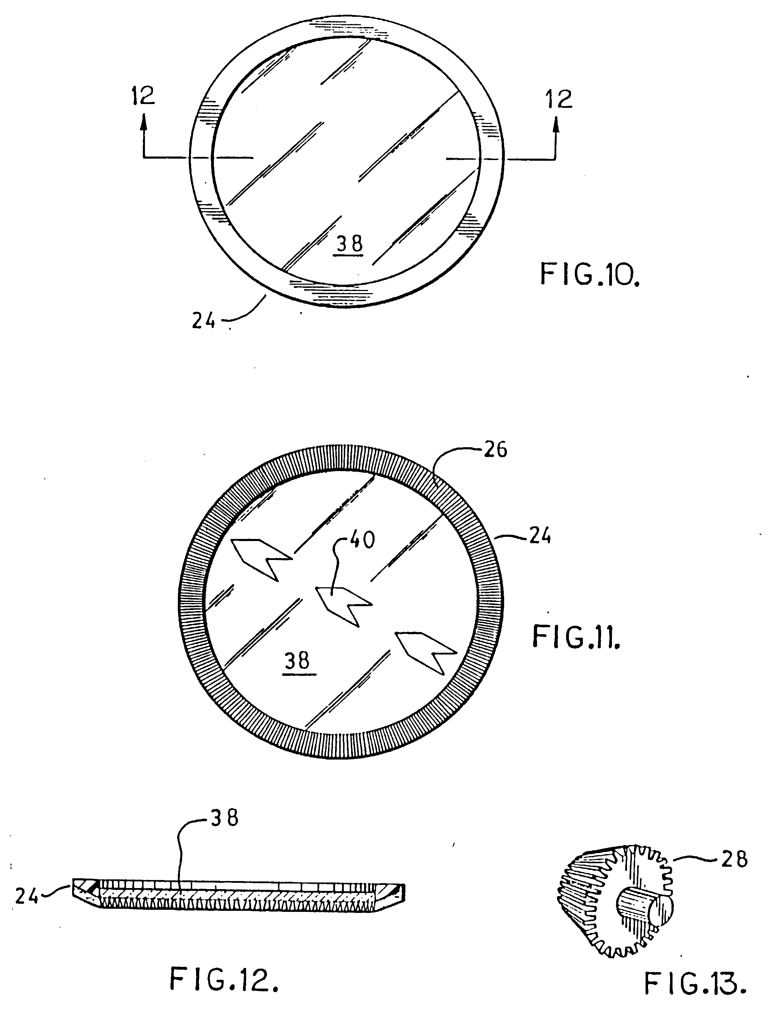

Fig. 10 is a top view of the direction ring;
Fig. 11 is a bottom view of the direction ring;
Fig. 12 is a cross-section at D-D on Fig. 10;
Fig. 13 is a perspective of one of the small gears;
Fig. 14 is a plan view of the preferred transparency holder;
Fig. 15 is a side view of the transparency holder;
Fig. 16 is a top view of the transparency holder, opened;
Fig. 17 is a top view of an alternative embodiment of the transparency holder, assembled;
Fig. 18 is a side view of the transparency holder;
Fig. 19 is a top view of the transparency holder, opened;
Fig. 20 is an exploded perspective, showing the various components of the navigation device, with an alternative transparency holder arrangement; and
Fig. 21 is a perspective showing an alternative embodiment of the case.

### BEST MODE FOR CARRYING OUT THE INVENTION

The invention is as defined in the appended claims.

In the preferred embodiment, the invention is embodied in a case, comprising a lower casing 2 and an upper casing 12. Mounted across the bottom end of the lower casing 2 in a rubber eye piece 4 is a lens 6. A transparency holder 8 is positioned across the upper end of the lower casing, to receive a map transparency 10. The transparency holder is at a distance from the lens approximating the focal length of the lens.

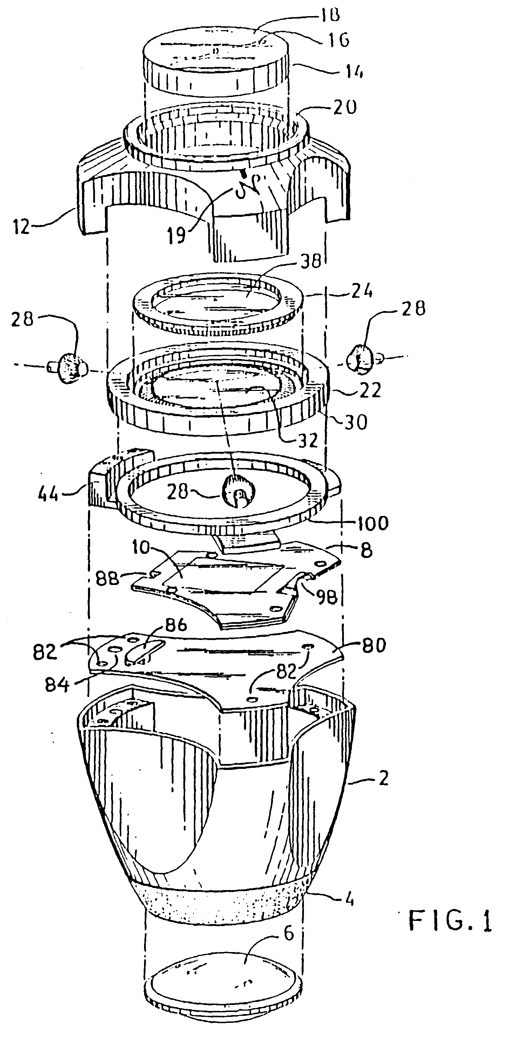

The upper casing 12 is removably fastened to the lower casing 2. A conventional compass 14, having a compass needle 16 mounted on a pin 18, is positioned across the upper end of the upper casing. A "North" or "N" marking 19, or other suitable indicator, is on the upper surface of the compass or, as illustrated in Fig. 1, on the upper casing adjacent the compass. A rubber ring 20 projects axially from the upper end of the upper casing to protect the casing and compass.

A grid wheel 22 and a direction wheel 24 are mounted between the upper and lower casings. The wheels have gear-teethed areas 26. Small gears 28, preferably three in number, are evenly spaced in fixed positions between the gear-teethed areas, rotation of one wheel thus producing counter-rotation of the other. One of the wheels, namely the grid wheel 22 in the illustrated embodiment, has a ring portion 30 projecting outwarding from at least a portion of the upper and lower casings, for use by the user to rotate the wheels.

The grid wheel 22 has a transparent or translucent central portion 32, inscribed with parallel grid lines 34 and at least one first directional arrow 36 aligned parallel to the grid lines. It is in close proximity to the transparency holder, such that it is also at a distance from the lens approximating the focal length of the lens. Thus when the user looks through the lens, both the map transparency and the grid lines are essentially in focus.

The direction wheel 24 has a transparent or translucent central portion 38 inscribed with at least one second directional arrow 40. Since it is spaced from the transparency and grid location by virtue of the small gears 28, the second directional arrow 40 is not seen in focus. The first and second directional arrows align with each other when pointing towards the North marking or 180 degrees therefrom.

Having one or both of the grid wheel and direction wheel with a translucent as opposed to transparent central portion may improve readability of the map transparency by diffusing available light evenly, provided that excessive attenuation is avoided. On the other hand, the invention clearly will work if both are transparent.

The upper and lower casings are fastened to each other in such a way that they can be separated to permit transparencies to be changed, such as by lifting the upper casing out of a detent in the lower casing against the force of a spring, to disengage the casings from each other, and then pivoting the upper casing away from the lower casing.

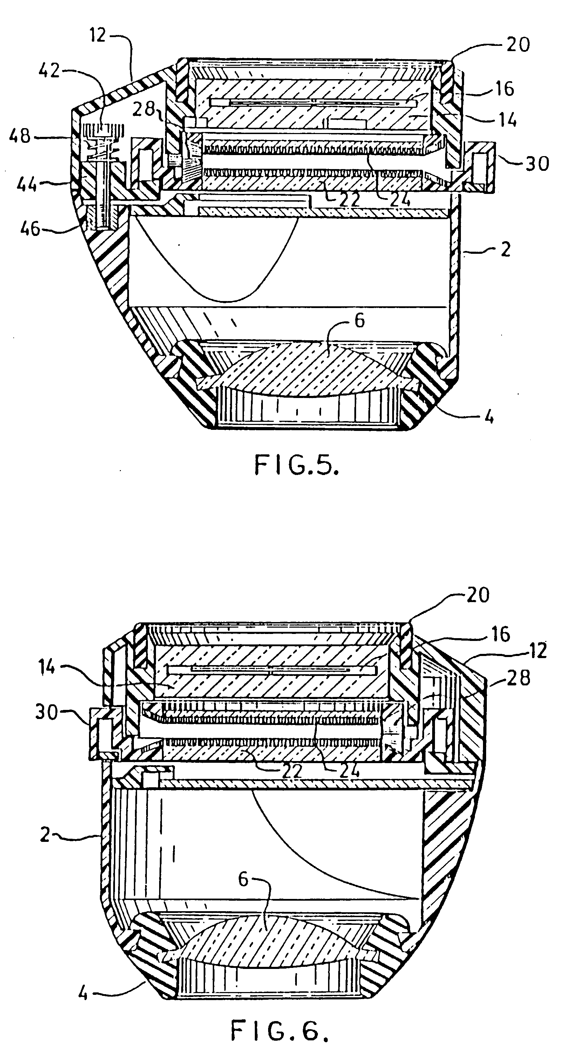

Thus as seen in Fig. 5, the upper and lower casings are fastened to each other via a socket screw 42 passing through a flange 44, and engaging a threaded metal insert 46 in the lower casing. A spring 48 biases the upper casing towards the lower casing. The casings can be separated to permit transparencies to be changed, by lifting the upper casing out of a detent in the lower casing against the force of the spring, to disengage the casings from each other, and then pivoting the upper casing away from the lower casing, about the socket screw 42.

The map transparency 10 must be prepared such that magnetic north is aligned with the N or North marking on the body of the compass.

The device is extremely simple to use. A bearing may be taken by looking at the map transparency through the lens 6, and manipulating the ring 30 so as to thereby rotate the grid wheel 22 and direction wheel 24, to align the grid lines and directional arrows thereon with the desired direction of travel on the map. Then the device is flipped over, and the compass needle is aligned with the North marking on the case (or on the body of the compass). The second directional arrow then indicates the bearing to be taken.

Of course, the transparency must be inserted with the correct orientation. Clear indicia could be marked on the transparency frame, e.g. "This Side Up" and/or "This Edge In", or a pattern on the transparency frame could be matched to a pattern on the transparency support. However, it is preferable to make it physically impossible to insert the transparency incorrectly, for example by using a tapered or asymmetrical transparency frame and complementary support, as shown in Fig. 1.

In the preferred embodiment shown in Figs. 1 and 14-16, the transparency holder 8 is positioned on a transparent transparency support 80 across the upper end of the lower casing. The transparency support is fastened to the lower casing by four screws passing through holes 82. The fifth hole 84 is for the socket screw which connects the upper and lower casings to pass through. On the transparency support is a "tee" 86, positioned off the center line of the transparency support so as to create asymmetry. The transparency holder 8 fits in partly under the tee, with a notch 88 engaging the base of the tee. The top of the tee preferably is spaced from the transparency support by the thickness of the transparency holder, so that the transparency holder is held down against the transparency support.

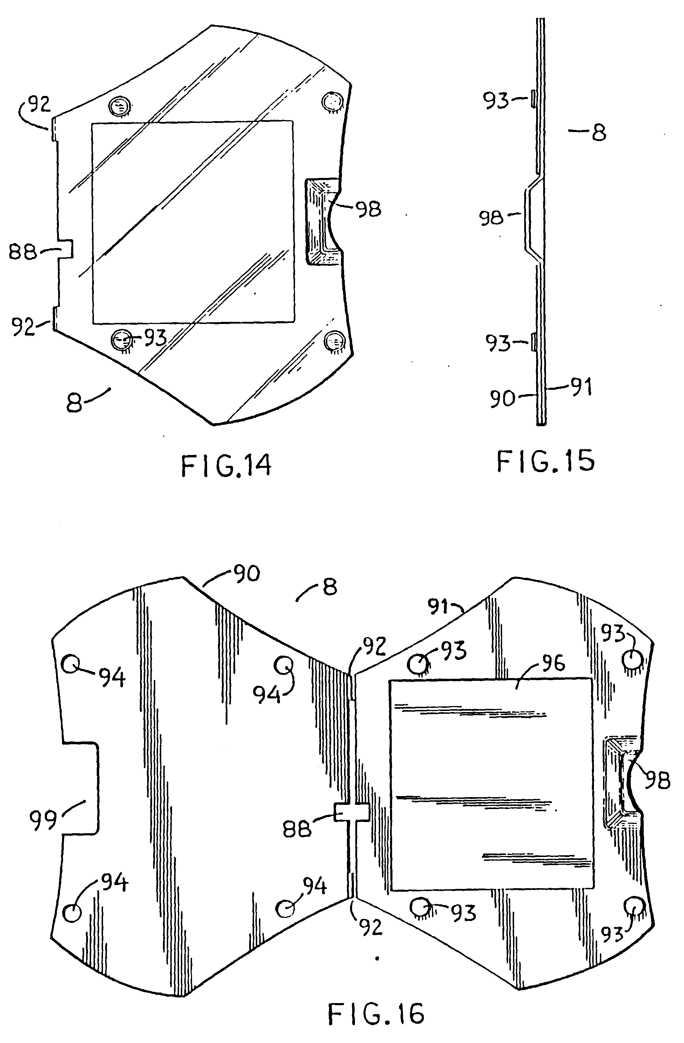

As seen in greater detail in Figs. 14-16, the transparency holder 8 has an upper half 90 and a lower half 91, connected by integral living hinges 92. Four posts 93 snap through corresponding holes 94 to lock the holder closed once a transparency is installed. The transparency holder is of transparent plastic, and has a central portion 96 which is recessed from the inner surface of the lower half 91 by about the thickness of the actual map transparency. The map transparency is inserted in the correct orientation, and then the holder is snapped shut.

The lower half 91 has a finger grip portion 98 which projects upwardly from the lower half through a notch 99 in the upper half. This facilitates insertion and removal of the transparency holders, i.e. to switch maps. The finger grip portion preferably projects upwardly to the same height as the top of the tee 86, and against the underside of the ring 100, so that the transparency holder is securely positioned.

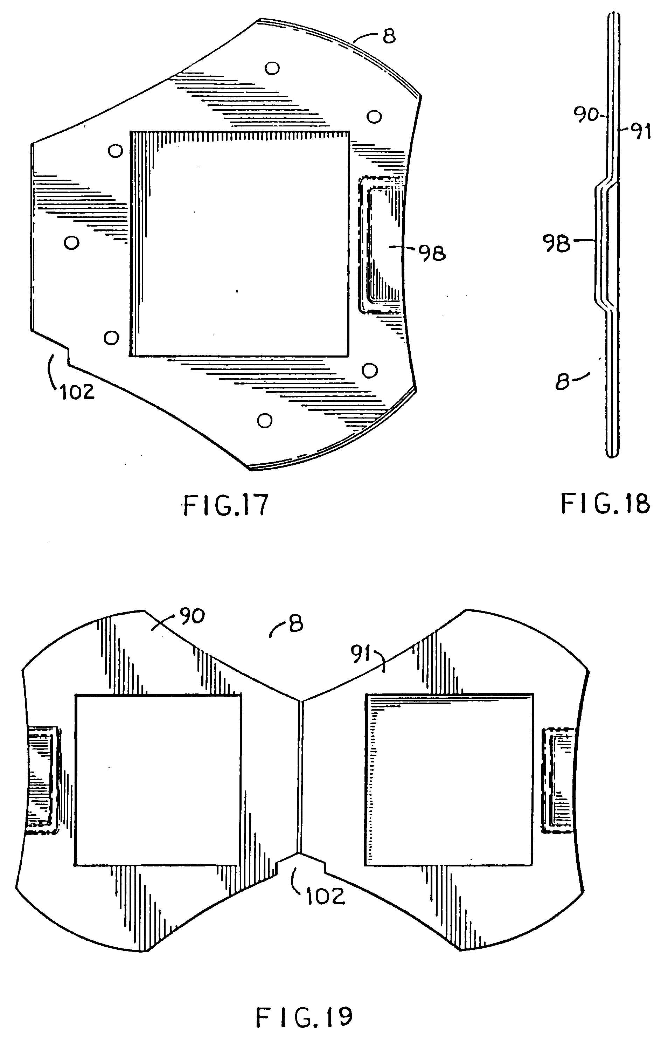

In the alternative embodiment shown in Figs. 17-19, the same principle is used, but instead of the notch 88, a notch 102 is provided at one edge of the hinged portion.

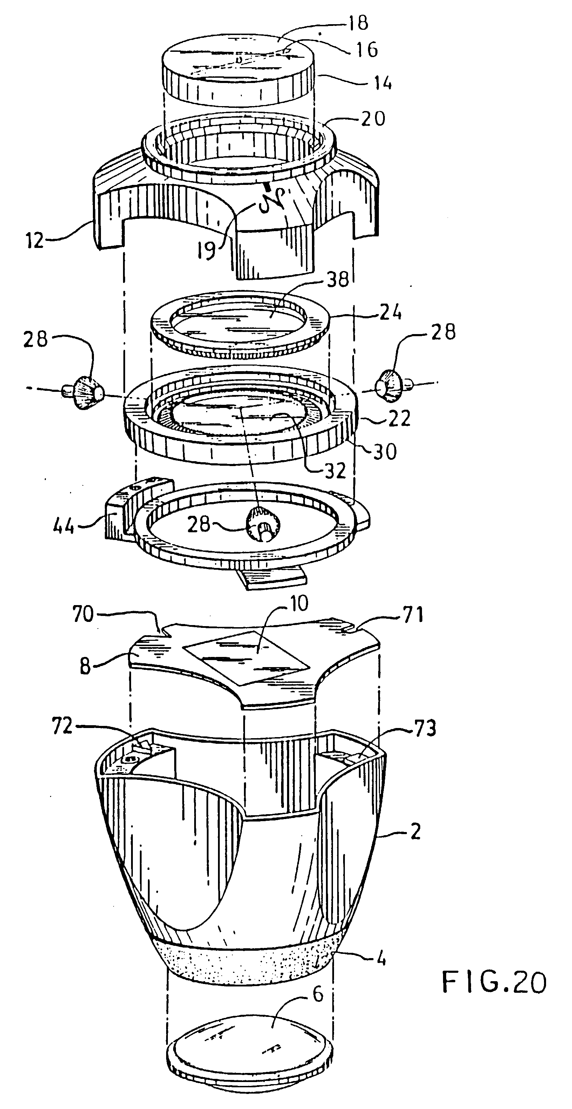

Another alternative embodiment is shown in Fig. 20. In this embodiment, there is no support 80, but merely the transparency holder 8 itself, provided with at least one notch positioned so as to create asymmetry, such as notches 70, 71 matching complementary projections 72, 73 respectively.

The desired asymmetry could obviously be provided by means other than notches. Regardless of the actual construction of the transparency holder or of its location, some form of asymmetry must be provided, whether in the form of notches as described above, or by other means such as making a transparency holder which is generally asymmetrical in shape (as opposed to being generally symmetrical but having asymmetric features such as off-center notches). Such obvious variations are considered to be within the scope of the invention.

It should be appreciated that all of the components of the device should be of plastic or other non-magnetic material, to avoid influencing the compass.

There remains a minor problem, as with all maps, in that for truly accurate readings, the transparencies must be updated periodically to account for the variation of magnetic declination with time. However, in most areas, particularly southern area, such variation is very small, well within the typical margin of error inherent in any map/compass system. Neverthless, if desired, the transparencies could be dated, and a warning could be provided to the user cautioning against the use of outdated transparencies.

It will be appreciated that the above description relates to the preferred embodiment by way of example only. Many variations on the invention will be obvious to those knowledgeable in the field, and such obvious variations are within the scope of the invention as described and claimed, whether or not expressly described.

For example, the transparency itself need not necessarily be oriented to magnetic north. Instead, the transparency support frame could be rotatable and lockable in any position to align the map image on the transparency with magnetic north. However, such a variation, although possible, is not preferred, because it is less foolproof. The transparency could be locked in the wrong position, either through inadvertence or mistake.

As in conventional hand-held transparency viewers, a battery, switch and light (preferably red, or switchable to red by use of a red filter) could be provided to facilitate use of the device at night or in poor lighting conditions. Otherwise, the user has to use a flashlight or other light source, which he or she would have to do in any event using conventional navigation equipment.

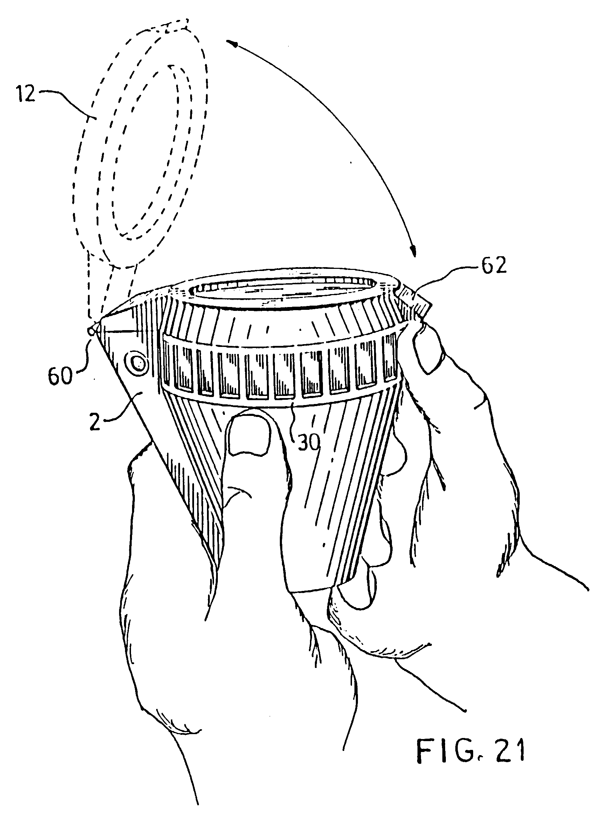

Instead of the upper casing swinging away laterally from the lower casing, it could be connected to the lower casing by a hinge 60 to flip up and open. The connection between the casings could be lockable and unlockable by any suitable means, such as by squeezing spring-loaded buttons, or as shown in Fig. 21, by using an integral clip 62 to snap the upper casing to the lower casing.

The particular structure of the case is not critical. The invention resides in the various components and their arrangement, rather than in the means in which they mounted.

Instead of the map transparency being positioned between the grid wheel and the lens, it should be appreciated that it may be positioned between the grid wheel and the direction wheel, adjacent the grid wheel, although such alternative positioning is slightly more difficult from an assembly viewpoint. The transparency holder has to have slots in it to provide space for the small gears 28. The grid wheel obviously must be transparent rather than merely translucent in such an arrangement.

### INDUSTRIAL APPLICABILITY

The invention provides a navigation device which is quick and easy to use, as well as being virtually foolproof. In addition to facilitating the taking of accurate bearings, the invention facilitates determining positions by bi-angulation or triangulation.

Since it is awkward and in some scenarios almost impossible to manipulate a large map with a compass, particularly if no table or other flat area is readily available, the invention provides a device which is likely to be used routinely, instead of being left at home. Occasions of lost hunters or hikers are thus likely to be less frequent.

Those knowledgeable in the field will readily appreciate other uses and advantages of the invention within the scope of the appended claims.

## Claims

1. A transparency holder for use in a navigation device adapted to receive said transparency holder carrying a map transparency, where said map transparency must be correctly oriented in the navigation device, comprising alignment means (70, 71, 88) for engaging complementary means (72,73,86) mounted on said device, said alignment means being asymmetrical about any axis of symmetry of said transparency holder, whereby said alignment means and said complementary means permit installation of said transparency holder in said device in only one possible orientation.

2. A transparency holder as recited in claim 1, in which said alignment means comprises at least one notch (70,71,88) provided in said transparency holder, for engaging complementary means (72,73,86) in said navigation device.

3. A transparency holder as recited in claim 1, in which said transparency holder comprises transparent upper and lower halves (90,91) fastenable to each other to sandwich said map transparency therebetween.

4. A transparency holder as recited in claim 3, in which said upper and lower halves are integral and connected to each other by a living hinge (92).

5. A transparency holder as recited in claim 3, in which at least one of the said upper and lower halves has a recessed area (96), the total depth of said recessed area(s) corresponding to the thickness of a map transparency.

6. The transparency holder as recited in claim 4, in which at least one of said upper and lower halves has a recessed area (96), the total depth of said recessed area(s) corresponding to the thickness of a map transparency.

7. The transparency holder of claim 2, in which said complementary means comprises a tee (86) projecting upwardly from a transparent transparency support (80) positioned within said device, said tee being positioned off the centre line of said transparency means and said complementary means permit installation of said transparency holder in said device in only one possible orientation.

8. A map transparency holder for insertion in a navigational device of the type which required that the map transparency be correctly oriented in the navigational device, the map transparency holder having asymmetric alignment means that are positioned to engage complementary asymmetric alignment means on the navigational device as a precondition to insertion of the map transparency in the correct orientation and to prevent installation of the transparency holder in the navigational device until the asymmetric alignment means and the complementary asymmetric alignment means are complementarily engaged.

9. A map transparency holder for insertion in a navigational device of the type wherein the map transparency must be correctly oriented in the navigational device, the transparency holder having an asymmetric configuration that complimentarily engages a support means on said navigational device and prevents installation of the transparency holder in said device when there is misalignment of the asymmetric transparency holder and the complementary asymmetric support.

## Patentansprüche

1. Ein Leuchtbildhalter zum Gebrauch in einer Navigationsvorrichtung, welche so angepasst ist, um den vorgenannten Leuchtbildhalter zu empfangen, welcher eine Karte hält, wobei das vorgenannte Karten-Leuchtbild korrekt ausgerichtet in der Navigationsvorrichtung sein muss, welche Ausrichtungsmittel (70, 71, 88) enthält, um ergänzende Mitteln ( 72, 73, 86) einzuschalten, welche an der vorgenannten Vorrichtung angebracht sind, wobei die vorgenannten Ausrichtungsmittel asymmetrisch um jede Achsensymmetrie des vorgenannten Leuchtbildhalters sind, und wobei die vorgenannten Ausrichtungsmittel und die vorgenannten ergänzenden Mittel den Einbau des vorgenannten Leuchtbildhalters in die vorgenannte Vorrichtung nur in einer möglichen Richtung erlauben.

2. Ein Leuchtbildhalter, wie in Anspruch 1 beschrieben, in welchem die vorgenannten Ausrichtungsmittel mit mindestens einer Kerbe (70, 71, 88) versehen sind, welche im vorgenannten Leuchtbildhalter vorgesehen ist, um die ergänzenden Mittel (72, 73, 86) in der vorgenannten Navigationsvorrichtung einzuschalten.

3. Ein Leuchtbildhalter, wie in Anspruch 1 beschrieben, in welchem der vorgenannte Leuchtbildhalter mit transparenten oberen und unteren Hälften (90, 91) versehen ist, welche miteinander befestigt werden können, um das vorgenannte Karten-Leuchtbild dazwischen festzuhalten.

4. Ein Leuchtbildhalter, wie in Anspruch 3 beschrieben, in welchem die vorgenannten oberen und unteren Hälften integral sind und durch ein lebendes Gelenk (92) miteinander verbunden sind.

5. Ein Leuchtbildhalter, wie in Anspruch 3 beschrieben, in welchem mindestens eine der vorgenannten oberen und unteren Hälften mit einer Einbuchtung (96) versehen ist, wobei die Gesamtdicke der vorgenannten Einbuchtung(en) mit der Dicke des Karten-Leuchtbildes übereinstimmt.

6. Der Leuchtbildhalter, wie in Anspruch 4 beschrieben, in welchem mindestens eine der vorgenannten oberen und unteren Hälften mit einer Einbuchtung (96) versehen ist, wobei die Gesamtdicke der vorgenannten Einbuchtung(en) mit der Dicke des Karten-Leuchtbildes übereinstimmt.

7. Der Leuchtbildhalter aus Anspruch 2, in welchem die vorgenannten ergänzenden Mittel ein T-Stück (86) enthalten, welches nach oben gerichtet aus einer transparenten, innerhalb der vorgenannten Vorrichtung angebrachten, Leuchtbild-Stütze (80) herausragt, wobei das vorgenannte T-Stück neben der Mittellinie der vorgenannten Leuchtbild-Mittel angebracht ist, und die vorgenannten ergänzenden Mittel den Einbau des vorgenannten Leuchtbildhalters in der vorgenannten Vorrichtung in nur einer möglichen Richtung erlauben.

8. Ein Karten-Leuchtbildhalter zum Einsatz in eine Navigationsvorrichtung von der Art, wonach das Karten-Leuchtbild korrekt ausgerichtet in der Navigationsvorrichtung ist, wobei der Karten-Leuchtbildhalter asymmetrische Ausrichtungsmittel hat, welche so angebracht sind, dass ergänzende asymmetrische Ausrichtungsmittel in der Navigationsvorrichtung eingreifen als Vorbedingung zum Einfügen des Karten-Leuchtbildes in der korrekten Ausrichtung, und um den Einbau des Leuchtbildhalters in der Navigationsvorrichtung zu verhindern, bis die asymmetrischen Ausrichtungsmittel und die ergänzenden asymmetrischen Ausrichtungsmittel ergänzend eingegriffen haben.

9. Ein Karten-Leuchtbildhalter zum Einfügen in eine Navigationsvorrichtung der Art, wonach das Karten-Leuchtbild korrekt ausgerichtet in der Navigationsvorrichtung sein muss, wobei der Leuchtbildhalter eine asymmetrische Konfiguration hat und ergänzend mit einem Stützmittel in der vorgenannten Navigationsvorrichtung eingreift und den Einbau des Leuchtbildhalters in die vorgenannte Vorrichtung verhindert, wenn eine Verlagerung des asymmetrischen Leuchtbildhalters und der ergänzenden asymmetrischen Stütze besteht.

## Revendications

1. Un support de diapositives pour emploi dans un appareil de navigation adapté pour recevoir ce support de diapositives qui porte un carte transparente, où la carte transparente doit être orientée correctement dans l'appareil de navigation, qui comprend des moyens d'alignement (70, 71, 88) capables d'engager des moyens complémentaires (72, 73, 86) montés sur le dit appareil, ces moyens d'alignement étant asymétriques autour d'un axe de symétrie quelconque du dit support de diapositives, par quoi les dits moyens d'alignement et les dits moyens complémentaires permettent l'installation du dit support de diapositives dans l'appareil dans une seule orientation possible.

2. Un support de diapositives selon la revendication 1., dans lequel les dits moyens d'alignement (70, 71, 88) comprennent au moins une encoche prévue dans ce dit support de diapositives, pour assurer leur engagement avec les moyens complémentaires (72, 73, 86) dans le dit appareil de navigation.

3. Un support de diapositives selon la revendication 1, dans lequel ce support de diapositives comprend les moitiés inférieure et supérieure transparentes (90, 91) capables d'être attachées l'une à l'autre pour permettre l'insertion de la carte transparent entre elles.

4. Un support de diapositives selon la revendication 3, in lequel les dites moitiés supérieure et inférieure forment un tout intégral et sont reliées l'une à l'autre par une charnière vive (92).

5. Un support de diapositives selon la revendication 3, dans lequel une au moins des dites moitiés supérieure et inférieure possède un évidement (96), la profondeur totale de cet évidement(s) correspondant à l'épaisseur de la carte transparente.

6. Le support de diapositives selon la revendication 4, dans lequel une au moins des moitiés supérieure et inférieure possède un évidement (96), la profondeur totale du dit évidement correspondant à l'épaisseur de la carte transparente.

7. Le support de diapositives selon la revendication 2, dans lequel les dits moyens complémentaires comprennent un T (86) qui projette vers le haut à partir du support de diapositives (80) placé dans le dit appareil, ce T étant positionné hors de la ligne de centre du dit support, et les dits moyens complémentaires permettant l'installation de ce support de diapositives dans le dit appareil dans une seule orientation possible.

8. Un support de diapositives à insérer dans un appareil de navigation, du type qui exige que la carte transparente soit orientée correctement dans l'appareil de navigation, le support de diapositives ayant des moyens d'alignement asymétriques positionnés de manière à venir en engagement avec des moyens d'alignement complémentaires sur l'appareil de navigation, comme pré-condition à l'insertion de la carte transparente dans une orientation correcte, et pour prévenir l'installation du support de diapositives dans l'appareil de navigation jusqu'à ce que les moyens asymétriques d'alignement et les moyens asymétriques complémentaires d'alignement se trouvent en engagement complémentaire.

9. Un support de diapositives à insérer dans un appareil de navigation du type dans lequel la carte transparente doit être orientée correctement dans l'appareil de navigation, le support de diapositives ayant une configuration asymétrique capable de venir en engagement complémentaire avec des moyens de support sur le dit appareil de navigation, et qui prévient l'installation de ce support de diapositives dans le dit appareil en cas de mauvais alignement du support asymétrique de diapositives et du support asymétrique complémentaire.
